# EUROPEAN PATENT APPLICATION

(11) **EP 3 663 420 A1**
(43) Date of publication of application: **10.06.2020**
(21) Application number: 18840703.5
(22) Date of filing: 01.08.2018
(51) Int. Cl.: C22B 26/12, B01D 9/02, C22B 3/08, C22B 7/00, H01M 10/54

(54) **SODIUM REMOVAL METHOD, METAL CONCENTRATING METHOD, AND METAL RECOVERY METHOD**

(30) Priority: 02.08.2017 JP 2017150165; 02.08.2017 JP 2017150166
(60) Divisional application: 20159890.1
(71) Applicant: JX Nippon Mining & Metals Corporation, Tokyo 100-8164 (JP)
(72) Inventor: ARIYOSHI, Hirotaka, Hitachi-shi Ibaraki 317-0056 (JP); TOMITA, Isao, Hitachi-shi Ibaraki 317-0056 (JP); ABE, Hiroshi, Hitachi-shi Ibaraki 317-0056 (JP)
(74) Representative: Arnold & Siedsma
(86) International application number: PCT/JP2018/028928
(87) International publication number: WO 2019/026977

(57) **Abstract**

A sodium removal method according to the present invention is a method for removing sodium from a sodium-containing solution by precipitating a sodium ion in the sodium-containing solution as a sodium salt, the method including: a sodium precipitating step of precipitating the sodium salt by decreasing a temperature of the sodium-containing solution so that a sodium concentration of the sodium-containing solution exceeds solubility of the sodium salt at said temperature; and a solid-liquid separation step of removing the precipitated sodium salt by solid-liquid separation.

## Description

### TECHNICAL FIELD

The present invention relates to a method for removing sodium from a sodium-containing solution containing a sodium ion. More particularly, the present invention proposes a technique capable of effectively removing sodium without any significant loading.
The present invention also relates to a metal concentrating method for increasing a concentration of metal ions in a metal-containing solution containing a sodium ion and metal ions to be concentrated, and a metal recovery method using the same. More particularly, the present invention proposes a technique capable of effectively concentrating metal ions to be concentrated in a short period of time and improving a recovery process of such metals.

### BACKGROUND ART

Metal recovery methods include a dry method of melting and recovering a metal, and a wet method of dissolving a metal in a solution such as an acid to recover the metal(s). The wet method is generally carried out by separating and recovering the dissolved metal (metal ion) by precipitating it in the form of metal or compound from the solution.

Here, for example, when the metal-dissolved solution is acidic, sodium salts are used as alkalis for pH adjustment and neutralization. The most typical alkali is sodium hydroxide, among others. When such a sodium salt is used, the solution will contain a large amount of a sodium ion. The solution containing a large amount of the sodium ion causes a problem that for example, when a target metal is concentrated and recovered by solvent extraction, sodium is also extracted into the solvent to inhibit concentration of the target metal.

For example, as an example of a method for recovering a metal by the wet method as described above, a method for recovering lithium from lithium ion battery scrap by the wet method generally removes a harmful electrolyte by roasting the lithium ion battery scrap, and then carries out crushing and sieving in this order, and then adding battery powder obtained under a sieve of the sieving to a leaching solution to leach it, and dissolves lithium, nickel, cobalt, manganese, iron, copper, aluminum, and the like in the solution.
Subsequently, among the metal elements dissolved in the leached solution, iron, copper, aluminum and the like are sequentially or simultaneously removed to recover valuable metals such as cobalt, manganese and nickel. More particularly, the leached solution is subjected to solvent extraction neutralization at a plurality of stages depending on the metals to be separated, and further, each solution obtained at each stage is subjected to stripping, electrolysis, carbonation or other As a result, a lithium-containing solution containing a lithium ion is obtained.

### SUMMARY OF INVENTION

### Technical Problem

In the method of recovering the metal by the wet method as described above, if a large amount of sodium is contained in the solution during the process, sodium is mixed into lithium carbonate finally generated for the recovery of lithium to reduce the purity of lithium carbonate. In this case, a step of purifying lithium carbonate to remove sodium is required. Therefore, a lower concentration of sodium in the solution is desirable.
Conventional sodium removal methods for decreasing the sodium concentration in the solution include, for example, a method of using an adsorbent or performing electrodialysis, as well as a method of simply reducing the sodium concentration by bleeding off. However, there is a problem that the method of using the adsorbent or performing electrodialysis is expensive. Bleeding-off may be carried out as a last resort for decreasing the sodium concentration.

By the way, in order to effectively recover lithium from a lithium-containing solution obtained by the wet method for recovering the metal or the like, the lithium-containing solution is preferably concentrated to increase the lithium ion concentration. When concentrating the lithium ion and other metal ions in a metal-containing solution such as the above lithium-containing solution, it is considered that solvent extraction or resin adsorption is carried out, or concentration is carried out by heating.
However, in the solvent extraction and the resin adsorption, influences of other metal components that may be contained in the metal-containing solution cannot be ignored, and depending on coexisting components, the concentration may not be efficiently and effectively achieved. Further, in the concentration by heating, the heating cost is greatly increased, and the heat treatment requires a long period of time, which causes a problem in terms of efficiency, as well as other components such as a sodium ion which may be contained in addition to the lithium ion will be concentrated, for example.

The present invention has been made in view of such problems. An object of the present is to provide a sodium removal method capable of effectively removing a sodium ion in a sodium-containing solution to allow a sodium concentration of the sodium-containing solution to relatively easily decreased.
Another object of the present invention is to provide a metal concentrating method capable of effectively concentrating certain metal ions to be concentrated, at a relatively low cost and in a short period of time, and to provide a metal recovery method using the same.

### Solution to Problem

As a result of intensive studies for decreasing the sodium concentration in the sodium-containing solution, the present inventors have focused on other ions such as a sulfate ion that may be contained in the sodium-containing solution, and found that the other ions and the sodium ion form a sodium salt(s) depending on a temperature of the solution.

Under such findings, a sodium removal method according to the present invention is a method for removing sodium from a sodium-containing solution by precipitating a sodium ion in the sodium-containing solution as a sodium salt, the method comprising: a sodium precipitating step of precipitating the sodium salt by decreasing a temperature of the sodium-containing solution so that a sodium concentration in the sodium-containing solution exceeds solubility of the sodium salt at said temperature; and a solid-liquid separation step of removing the precipitated sodium salt by solid-liquid separation.

In the sodium removal method according to the present invention, the sodium-containing solution is preferably a sulfuric acid acidic solution.
The sodium removal method according to the present invention may comprise adding sulfuric acid to the sodium-containing solution before the sodium precipitating step and/or during the sodium precipitating step.

Here, in the sodium removal method according to the present invention, the sodium salt precipitated in the sodium precipitating step is preferably sodium sulfate.

In the sodium removal method according to the present invention, the sodium-containing solution preferably has a sodium concentration of 20.0 g/L or more.

In the sodium removal method according to the present invention, it is preferable that the temperature of the sodium-containing solution is decreased to 10 °C or less in the sodium precipitating step.

Further, in the sodium removal method according to the present invention, the sodium-containing solution preferably comprises a sodium-containing solution obtained by a wet treatment of lithium ion secondary battery scrap.

Preferably, in the sodium removal method according to the present invention, the sodium-containing solution contains a lithium ion.
In this case, the sodium-containing solution preferably has a lithium concentration of from 0.1 g/L to 40.0 g/L.
Also, in this case, the sodium-containing solution preferably has a molar ratio of the lithium concentration to the sodium concentration (Li/Na molar ratio) of larger than 0.08.

In the sodium removal method according to the present invention, a molar ratio of the lithium concentration to the sodium concentration (Li/Na molar ratio) in a separated solution obtained in the solid-liquid separation step is preferably larger than a molar ratio of the lithium concentration to the sodium concentration in the sodium-containing solution before the sodium precipitating step.

Further, as a result of intensive studies, the present inventors have focused on the fact that the metal-containing solution contains not only the metal ions to be concentrated, but also other ions such as a sodium ion and a sulfate ion, and found that the sodium ion and other ions form a sodium salt having a hydrate, depending on the temperature of the solution. Then, the present inventors have considered that the metal ions to be concentrated can be effectively concentrated by utilizing this fact.

Based on such findings, a metal concentrating method according to the present invention is for increasing a concentration of metal ions in a metal-containing solution containing a sodium ion and metal ions to be concentrated, the method comprising: a sodium precipitating step of precipitating the sodium ion in the metal-containing solution as a sodium salt, wherein a temperature of the metal-containing solution is decreased so that a sodium concentration in the metal-containing solution exceeds solubility of the sodium salt at said temperature to precipitate the sodium salt having crystal water; and a solid-liquid separation step of removing the precipitated sodium salt by solid-liquid separation after the sodium precipitating step.

In the metal concentrating method according to the present invention, the metal-containing solution is preferably a sulfuric acid acidic solution.

The metal concentrating method according to the present invention may comprise adding sulfuric acid to the metal-containing solution before the sodium precipitating step and/or during the sodium precipitating step.

In the metal concentrating method according to the present invention, the sodium salt having crystal water precipitated in the sodium precipitating step is preferably a sodium sulfate hydrate.

In the metal concentrating method according to the present invention, the metal-containing solution preferably has a sodium concentration of 20.0 g/L or more.

In the metal concentrating method according to the present invention, it is preferable that the temperature of the metal-containing solution is decreased to 10 °C or less in the sodium precipitating step.

Further, in the metal concentrating method according to the present invention, the metal-containing solution preferably comprises a metal-containing solution obtained by a wet treatment of lithium ion secondary battery scrap.

Preferably, in the metal concentrating method according to the present invention, the metal ions to be concentrated comprise a lithium ion.
In this case, the metal-containing solution preferably has a lithium concentration of from 0.1 g/L to 40.0 g/L.
Also, in this case, the metal-containing solution preferably has a molar ratio of the lithium concentration to the sodium concentration (Li/Na molar ratio) of larger than 0.08.

In the metal concentrating method according to the present invention, a molar ratio of the lithium concentration to the sodium concentration (Li/Na molar ratio) in a separated solution obtained in the solid-liquid separation step is preferably larger than a molar ratio of the lithium concentration to the sodium concentration in the metal-containing solution before the sodium precipitating step.

A metal recovery method according to the present invention comprises recovering metals of the metal ions to be concentrated using any one of the metal concentrating methods as described above.

### Advantageous Effects of Invention

According to the sodium removal method of the present invention, the sodium salt is intentionally precipitated by the sodium precipitating step of decreasing the temperature of the sodium-containing solution so that the sodium concentration in the sodium-containing solution exceeds the solubility of the sodium salt, and then removing it, thereby enabling sodium to be effectively removed without significant loading.

In the metal concentration method according to the present invention, the sodium precipitating step of precipitating the sodium salt having crystal water by decreasing the temperature of the metal-containing solution so that the sodium concentration in the metal-containing solution exceeds the solubility of the sodium salt intentionally precipitate the sodium salt having crystal water and then remove it, so that an apparent amount of the solution is decreased with the removal of the sodium salt. This increases the concentration of the metal ions to be concentrated, an amount of which does not change before and after the step, so that the metal ions can be efficiently concentrated at a relatively low cost.

### BRIEF DESCRIPTION OF DRAWINGS

FIG. 1 is a flowchart showing a sodium removal method according to an embodiment of the present invention.
FIG. 2 is a flowchart showing a metal concentrating method according to an embodiment of the present invention.
FIG. 3 is a graph showing a change in a sodium concentration as a function of a solution temperature in Example 1.
FIG. 4 is a graph showing a change in a lithium concentration as a function of a solution temperature in Example 2.
FIG. 5 is a graph showing a change in a sodium concentration as a function of a solution temperature in Example 2.

### DESCRIPTION OF THE PREFERRED EMBODIMENTS

Hereinafter, embodiments of the present invention will be described in detail.

### <Sodium Removal Method>

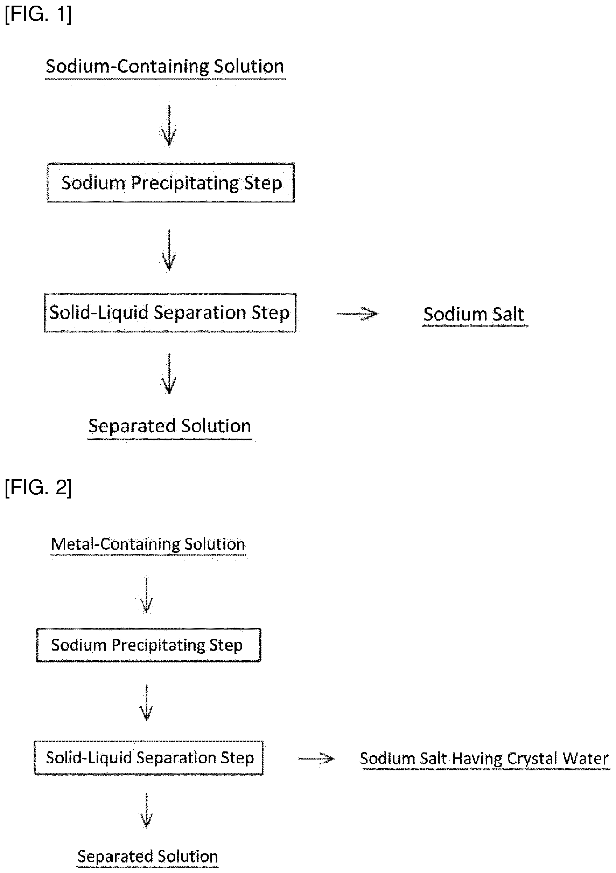

As illustrated in FIG. 1, in order to remove sodium from a sodium-containing solution, a sodium removal method according to an embodiment of the present invention includes: a sodium precipitating step of decreasing a temperature of the sodium-containing solution so that a sodium concentration in the sodium-containing solution exceeds solubility of a sodium salt at that temperature to precipitate the sodium salt; and then a solid-liquid separation step of removing the precipitated sodium salt by solid-liquid separation.

### (Sodium-Containing Solution)

The present invention can be applied to any sodium-containing solution as long as it contains at least the sodium ion.

The sodium-containing solution can suitably result from a wet treatment of lithium-ion secondary battery scrap, for example, battery powder obtained by sequentially carrying out roasting, crushing, sieving and other required treatments for lithium-ion secondary batteries discarded due to the life of the battery product, manufacturing defects or other reasons. Specifically, the wet treatment includes leaching of the battery powder in an acidic leaching solution such as sulfuric acid or hydrochloric acid or other mineral acid, followed by a multiple-stage solvent extraction or neutralization for the leached solution, and various solutions obtained after separating iron, aluminum, manganese, cobalt, nickel, and the like in a recovery step of performing the solvent extraction or neutralization can be used as a sodium-containing solution.

Preferably, the sodium-containing solution is a sulfuric acid solution. This is because, as described later, in the sodium precipitating step, sodium sulfate can be precipitated to remove it more effectively. Before and/or during the sodium precipitating step, sulfuric acid may also be added to the sodium-containing solution.
When the sodium-containing solution contains sulfuric acid, its concentration is preferably from 30 g/L to 330 g/L, and more preferably 50 g/L to 190 g/L as a sulfate ion concentration.

The sodium concentration in the sodium-containing solution is, for example, from 1.0 g/L to 80.0 g/L, typically 20.0 g/L or more, and more typically 40.0 g/L to 60.0 g/L. It is effective that such a sodium-containing solution containing a relatively high concentration of the sodium ion is subjected to sodium removal. An excessively low sodium concentration in the sodium-containing solution may decrease a temperature leading to the solubility at the time when sodium is to be removed by cooling in the sodium precipitating step as described below. In some cases, that temperature may be below freezing, and the target solution itself may solidify. On the other hand, an excessively high sodium concentration may increase an amount of the sodium salt generated in the sodium precipitating step, and it is thus concerned that a loss of the components to be recovered to adhesive water in the solid-liquid separation step is relatively increased.

It is preferable that the sodium-containing solution further contains a lithium ion in addition to the sodium ion. This is because the lithium can be effectively recovered after removing sodium as described later. When the sodium-containing solution contains the lithium ion, the lithium concentration in the sodium-containing solution is, for example, from 0.1 g/L to 40.0 g/L, typically from 2.0 g/L to 20.0 g/L, and more typically from 5.0 g/L to 12.0 g/L. A molar ratio of the lithium concentration to the sodium concentration in the sodium-containing solution is preferably larger than 0.08. The higher the Li/Na molar ratio, the higher the lithium recovery rate when recovering lithium carbonate as described below.

A pH of the sodium-containing solution before the sodium precipitating step as described blew is, for example, in a range of an acid concentration region to 13, typically from 1 to 5.

### (Sodium Precipitating Step)

The sodium ion in the sodium-containing solution as described above may be unintentionally precipitated as a sodium salt in the subsequent certain step. Further, for example, if lithium carbonate is to be produced when recovering lithium from the sodium-containing solution, the lithium carbonate will contain a considerable amount of sodium, so that the purity of lithium carbonate will be decreased and burdens on purification of lithium carbonate will be increased. Therefore, it is desirable to remove the sodium ion in the sodium-containing solution in advance. On the other hand, conventionally, this is addressed by strict control of the pH and periodic removal of a sodium concentrated solution. However, this leads to a loss of other metal components to be recovered.

Therefore, an embodiment of the present invention carries out a sodium precipitating step of precipitating a sodium salt by decreasing a temperature of the sodium-containing solution to a predetermined lower temperature. When the temperature of the sodium-containing solution is being decreased, the sodium salt begins to be precipitated as the sodium concentration in the sodium-containing solution exceeds the solubility of the predetermined sodium salt which is a solute, depending on an amount of a solvent of the sodium-containing solution. Accordingly, after the sodium ion in the sodium-containing solution is sufficiently precipitated as a sodium salt by such a decrease in the temperature, it can be removed in the solid-liquid separation step as described below, so that sodium contained in the sodium-containing solution can be effectively removed without any large burden. Further, when sodium is an inhibitory component in the extraction operation or the like, the method according to this embodiment reduces the sodium concentration, so that the recovery rate of the metal components to be recovered can be improved. The solution temperature can be returned to the predetermined temperature after the solid-liquid separation step.

In the sodium precipitating step, the sodium salt precipitated due to a decrease in the temperature of the sodium-containing solution is, for example, at least one selected from the group consisting of sodium sulfate, sodium sulfate heptahydrate and sodium sulfate decahydrate, although it depends on the type of the sodium-containing solution. When the sodium-containing solution is the sulfuric acid acidic solution, sodium sulfate is precipitated in a form having crystal water, so that there is an advantage that an apparent amount of the solution is decreased and other components are relatively concentrated. Also, in this case, the sulfate ion in the sodium-containing solution is also decreased, so that it is effective when it is desired to remove the sulfate ion.

It is preferable that in the sodium precipitating step, a target temperature when the temperature of the sodium-containing solution is decreased is 10 °C or lower. If the temperature is higher than 10 °C, the precipitation of the sodium salt may be insufficient.
On the other hand, since the sodium salt is more precipitated as the temperature is decreased, any preferable lower limit of the target temperature is not limited in terms of a precipitation amount of the sodium salt. However, if the temperature is excessively decreased, the target solution itself may solidify. Therefore, the target temperature is preferably 0 °C or higher. Thus, more preferably, the temperature of the sodium-containing solution is decreased to 0 °C to 10 °C. Even more preferably, the temperature of the sodium-containing solution is decreased to 3 °C to 7 °C.

A cooling rate for decreasing the temperature of the sodium-containing solution can be from 0.5 °C/min to 2.0 °C/min. If the rate is too high, a temperature may be too decreased locally and the solution may solidify. Also, if it is too slow, the resulting sodium salt will be coarse, and the solution will be involved during the precipitation, possibly resulting in a loss of the components to be recovered. The cooling rate is an average value of rates that can be calculated from the solution temperatures measured at an interval of one minute and from the time intervals.

Once the temperature of the sodium-containing solution reaches the target temperature, the target temperature can be maintained for 60 to 180 minutes from the time when the temperature reaches the target temperature. If the retention time is shorter, the precipitation of the sodium salt may be insufficient. On the other hand, if the retention time is longer, the precipitated sodium salt leads to crystal growth. In this case, it will entrain the solution, possibly resulting in a loss of the components to be recovered.

When cooling and maintaining the sodium-containing solution at the predetermined low temperature, the sodium-containing solution can be stirred as needed. This can lead to fine crystals of the precipitated sodium salt, so that the loss of the components to be recovered due to a decrease in entrainment of the solution is reduced. The stirring speed at this time can be, for example, from about 300 rpm to 600 rpm, but it may vary depending on the apparatus or the like. Therefore, the stirring speed is not limited to this range, and the stirring may be preferably carried out as strong as possible.

A cooling apparatus for decreasing the temperature of the sodium-containing solution is preferably made of a material having a relatively high thermal conductivity while at the same time a solution contacting portion can withstand properties of the sodium-containing solution. However, various known cooling apparatuses may be used.

### (Solid-Liquid Separation Step)

After precipitating the sodium salt in the above sodium precipitating step, solid-liquid separation is carried out using a known device or method such as a filter press and a thickener to remove the solid sodium salt to obtain a separated solution. Accordingly, the sodium concentration of the separated solution will preferably be 40 g/L or less, and more preferably 30 g/L or less.

On the other hand, when the lithium ion is contained in the sodium-containing solution, almost no lithium ion is precipitated in the sodium precipitating step, so that most of the lithium is contained in the state of a ion dissolved in the separated solution. The lithium concentration in the separated solution is preferably from 10 g/L to 40 g/L, and more preferably from 20 g/L to 30 g/L. Thus, in the embodiment of the present invention, sodium is effectively removed, while lithium is not substantially removed, so that the loss of lithium recovery in recovering lithium can be suppressed. It is preferable that a molar ratio of the lithium concentration to the sodium concentration in the separated solution is larger than a molar ratio of the lithium concentration to the sodium concentration in the sodium-containing solution before the sodium precipitating step.

A pH of the separated solution is, for example, generally from an acidic concentration region to 13, typically from 1 to 4.
The sodium precipitating step and the solid-liquid separation step may be either continuous processing or batch processing.

### (Recovery of Lithium)

The separated solution obtained through the sodium precipitating step and the solid-liquid separation step as described above can be subjected to a carbonation treatment in order to recover lithium contained in the separated solution. Here, the lithium ion in the separated solution is recovered as lithium carbonate by adding a carbonate salt to the separated solution or blowing a carbon dioxide gas into the separated solution.

After the addition of the carbonate salt or the blowing of the carbon dioxide gas, for example, the solution temperature is in a range of from 20 °C to 50 °C, and maintained for a certain period of time optionally with stirring.
The carbonate salt to be added to the separated solution includes sodium carbonate, ammonium carbonate and the like. Sodium carbonate is preferred in terms of the recovery rate. An amount of the carbonate salt added can be, for example, from 1.0 to 1.7 times, preferably from 1.2 to 1.5 times, the molar amount of Li. The amount of the carbon dioxide gas added can be, for example, from 1.0 to 1.7 times, preferably from 1.2 to 1.5 times, the molar amount of Li.

When the carbonate salt is added, the carbonate salt is preferably added to the separated solution as a solid without being dissolved in water or the like. This is because when the carbonate salt is dissolved and added as a solution, an amount of the solution increases by the added fraction, so that an amount of lithium carbonate dissolved increases, leading to a loss of lithium.

It is preferable that a pH of the separated solution during carbonation is relatively high, such as from 10 to 13. If the carbonate salt is added in a state of a lower pH, it will escape as a carbon dioxide gas, so that a reaction efficiency may be decreased.

Lithium carbonate thus obtained does not contain sodium because sodium has been removed in the sodium removal step as stated above, and it will have higher purity. The lithium quality of lithium carbonate is preferably at least 17%, and more preferably at least 18%.
If the lithium quality of lithium carbonate is lower than a predetermined value, the lithium carbonate can be purified to obtain lithium carbonate having higher quality. The purification can be carried out by a generally known technique.

### <Metal Concentrating Method>

As illustrated in FIG. 2, the metal concentrating method according to an embodiment of the present invention includes: a sodium precipitating step of precipitating a sodium salt having crystal water by decreasing a temperature of a metal-containing solution in order to increase a concentration of metal ions to be concentrated, which are contained in the metal-containing solution, so that a sodium concentration in the metal-containing solution exceeds solubility of a sodium salt at that temperature; and then a solid-liquid separation step of removing the precipitated sodium salt by solid-liquid separation.

### (Metal-Containing Solution)

The present invention can be applied to any metal-containing solution as long as it contains at least a sodium ion and metal ions to be concentrated.

The metal-containing solution can suitably result from a wet treatment of lithium-ion secondary battery scrap, for example, battery powder is obtained by sequentially carrying out roasting, crushing, sieving and other required treatments for lithium-ion secondary batteries discarded due to the life of the battery product, manufacturing defects or other reasons. Specifically, the wet treatment includes leaching of the battery powder in an acidic leaching solution such as sulfuric acid or hydrochloric acid or other mineral acid, followed by a multiple-stage solvent extraction or neutralization for the leached solution, and various solutions obtained after separating iron, aluminum, manganese, cobalt, nickel, and the like in a recovery step of performing the solvent extraction or neutralization can be used as a metal-containing solution.

Preferably, the sodium-containing solution is a sulfuric acid solution. This is because, as described later, in the sodium precipitating step, sodium sulfate can be precipitated to remove it more effectively. Before and/or during the sodium precipitating step, sulfuric acid may also be added to the metal-containing solution.
When the metal-containing solution contains sulfuric acid, its concentration is preferably from 30 g/L to 330 g/L, and more preferably 50 g/L to 190 g/L as a sulfate ion concentration.

The sodium concentration in the metal-containing solution is, for example, from 1.0 g/L to 50.0 g/L, typically from 20.0 g/L to 40.0 g/L. It is effective that such a metal-containing solution containing a relatively high concentration of the sodium ion is used as a target. An excessively low sodium concentration in the metal-containing solution may decrease a temperature leading to the solubility at the time when sodium is to be removed by cooling in a sodium precipitating step as described below. In some cases, that temperature may be below freezing, and the target solution itself may solidify. On the other hand, an excessively high sodium concentration may increase an amount of the sodium salt generated in the sodium precipitating step, and it is thus concerned that a loss of the components to be recovered to adhesive water in the solid-liquid separation step is relatively increased.

It is preferable that the metal ions to be concentrated, which are contained in the metal-containing solution, include at least a lithium ion. This is because the lithium can be effectively recovered after removing sodium as described later. When the metal-containing solution contains the lithium ion, the lithium concentration in the metal-containing solution is, for example, from 0.1 g/L to 40.0 g/L, typically from 2.0 g/L to 20.0 g/L, and more typically from 5.0 g/L to 12.0 g/L. A molar ratio of the lithium concentration to the sodium concentration in the metal-containing solution is preferably larger than 0.08. The higher the Li/Na molar ratio, the higher the lithium recovery rate when recovering lithium carbonate as described below.

The metal-containing solution may further contain from 0.3 g/L to 1.0 g/L of nickel ion, and from 0.05 g/L to 0.15 g/L of magnesium ion. In this case, the nickel ion and the magnesium ion in the metal-containing solution will also be concentrated in the sodium precipitating step as described below, as with the lithium ion. In addition, when a component having higher solubility at a lower temperature is contained, such a component can also be concentrated.

A pH of the metal-containing solution before the sodium precipitating step as described blew is, for example, in a range of an acid concentration region to 13, typically from 1 to 5.

### (Sodium Precipitating Step)

In order to increase the concentration of the metal ions to be concentrated in the metal-containing solution as described above, the conventional method carries out concentration by solvent extraction or resin adsorption, or heating concentration. However, the solvent extraction and the resin absorption cannot allow any effective concentration due to the influence of the other components, and the heating concentration requires a significant cost and time for heating, and would lead to concentration of unintended components such as sodium together.

Therefore, the embodiment according to the present invention carries out a sodium precipitating step of precipitating a sodium salt having crystal water by decreasing the temperature of the metal-containing solution to a predetermined low temperature, thereby allowing an increase in the concentration of metal ions to be concentrated due to a decrease in an apparent solution amount. More particularly, when the temperature of the metal-containing solution is being decreased, the sodium salt begins to be precipitated as the sodium concentration in the metal-containing solution exceeds the solubility of the predetermined sodium salt which is a solute, depending on an amount of a solvent of the sodium-containing solution. Then, the sodium salt precipitated by such a temperature decrease contains crystal water which is thus removed in a solid-liquid separation step as described below, resulting in a decrease in an apparent solution amount and an increase in concentrations of the metal ions to be concentrated.
The solution temperature can be returned to the predetermined temperature after the solid-liquid separating step.

In the sodium precipitating step, the sodium salt precipitated due to a decrease in the temperature of the metal-containing solution should be a sodium salt having crystal water in order to allow a decrease in an apparent solution amount, and incudes, for example, sodium sulfate hydrate, sodium sulfate heptahydrate, and sodium sulfate decahydrate, although it depends on the type of the metal-containing solution. Among them, the sodium sulfate hydrate is generally a decahydrate, and when the metal-containing solution is the sulfuric acid acidic solution, sodium sulfate is precipitated in a form having crystal water.

It is preferable that in the sodium precipitating step, a target temperature when the temperature of the metal-containing solution is decreased is 10 °C or lower. If the temperature is higher than 10 °C, the precipitation of the sodium salt having crystal water may be insufficient.
On the other hand, since the sodium salt is more precipitated as the temperature is decreased, any preferable lower limit of the target temperature is not limited in terms of a precipitation amount of the sodium salt having crystal water. However, if the temperature is excessively decreased, the target solution itself may solidify. Therefore, the target temperature is preferably 0 °C or higher. Thus, more preferably, the temperature of the metal-containing solution is decreased to a range of from 0 °C to 10 °C. Even more preferably, the temperature of the metal-containing solution is decreased to 3 °C to 7 °C.

A cooling rate for decreasing the temperature of the metal-containing solution can be from 0.5 °C/min to 2.0 °C/min. If the rate is too high, a temperature may be too decreased locally and the solution may solidify. Also, if it is too slow, the resulting sodium salt will be coarse, and the solution will be involved during the precipitation, possibly resulting in a loss of the components to be recovered. The cooling rate is an average value of rates that can be calculated from the solution temperatures measured at an interval of one minute and from the time intervals.

Once the temperature of the metal-containing solution reaches the target temperature, the target temperature can be maintained for 60 to 180 minutes from the time when the temperature reaches the target temperature. If the retention time is shorter, the precipitation of the sodium salt may be insufficient. On the other hand, if the retention time is longer, the precipitated sodium salt leads to crystal growth. In this case, it will entrain the solution, possibly resulting in a loss of the components to be recovered.

When cooling and maintaining the metal-containing solution at the predetermined low temperature, the metal-containing solution can be stirred as needed. This can lead to fine crystals of the precipitated sodium salt, so that the loss of the components to be recovered due to a decrease in entrainment of the solution is reduced. The stirring speed at this time can be, for example, from about 300 rpm to 600 rpm, but it may vary depending on the apparatus or the like. Therefore, the stirring speed is not limited to this range, and the stirring may be preferably carried out as strong as possible.

A cooling apparatus for decreasing the temperature of the sodium-containing solution is preferably made of a material having a relatively high thermal conductivity while at the same time a solution contacting portion can withstand properties of the metal-containing solution. However, various known cooling apparatuses may be used.

### (Solid-Liquid Separation Step)

After precipitating the sodium salt in the above sodium precipitating step, solid-liquid separation is carried out using a known device or method such as a filter press and a thickener to remove the solid sodium salt having crystal water to obtain a separated solution. Accordingly, the sodium concentration in the separated solution will preferably be 40 g/L or less, and more preferably 30 g/L or less.

On the other hand, almost no metal ion to be concentrated in the metal-containing solution, for example the lithium ion or the like, is precipitated in the sodium precipitating step, so that the metal ions to be concentrated remain in the separated solution. However, here, an apparent solution amount of the metal-containing solution is decreased due to precipitation of the sodium salt having crystal water in the sodium precipitating step as described above, so that concentrations of the metals to be concentrated in the separated solution are increased. For example, the lithium concentration in the separated solution is preferably from 10 g/L to 40 g/L, and more preferably from 20 g/L to 30 g/L. It is preferable that a molar ratio of the lithium concentration to the sodium concentration in the separated solution is larger than a molar ratio of the lithium concentration to the sodium concentration in the sodium-containing solution before the sodium precipitating step.

A pH of the separated solution is, for example, generally from an acidic concentration region to 13, typically from 1 to 4.

The sodium precipitating step and the solid-liquid separation step may be either continuous processing or batch processing.

In the separated solution after removing the sodium salt having crystal water in the solid-liquid separation step, a concentration ratio of the metal to be concentrated, such as lithium, is preferably from 1.1 to 1.5 times. The concentration ratio is a concentration ratio of metals in the solution before and after the treatment comprised of the sodium precipitating step and the solid-liquid separation step, that is, a ratio obtained by dividing the concentration of the metals in the separated solution by the concentration of the metals in the metal-containing solution before the sodium precipitating step. Before and after such a treatment, there is substantially no change in an amount itself of the metals in the solution, but an apparent concentration of the metals increases due to a decrease in an amount of the solution.

### (Recovery of Lithium)

The separated solution obtained through the sodium precipitating step and the solid-liquid separation step as described above can be subjected to a carbonation treatment in order to recover lithium contained in the separated solution. Here, the lithium ion in the separated solution is recovered as lithium carbonate by adding a carbonate salt to the separated solution or blowing a carbon dioxide gas into the separated solution.

After the addition of the carbonate salt or the blowing of the carbon dioxide gas, for example, the solution temperature is in a range of from 20 °C to 50 °C, and maintained for a certain period of time optionally with stirring.
The carbonate salt to be added to the separated solution includes sodium carbonate, ammonium carbonate and the like. Sodium carbonate is preferred in terms of the recovery rate. An amount of the carbonate salt added can be, for example, from 1.0 to 1.7 times, preferably from 1.2 to 1.5 times, the molar amount of Li. The amount of the carbon dioxide gas added can be, for example, from 1.0 to 1.7 times, preferably from 1.2 to 1.5 times, the molar amount of Li.

When the carbonate salt is added, the carbonate salt is preferably added to the separated solution as a solid without being dissolved in water or the like. This is because when the carbonate salt is dissolved and added as a solution, an amount of the solution increases by the added fraction, so that an amount of lithium carbonate dissolved increases, leading to a loss of lithium.

It is preferable that a pH of the separated solution during carbonation is relatively high, such as from 10 to 13. If the carbonate salt is added in a state of a lower pH, it will escape as a carbon dioxide gas, so that a reaction efficiency may be decreased.

Lithium carbonate thus obtained does not contain sodium because sodium has been removed in the sodium removal step as stated above, and it will have higher purity. The lithium quality of lithium carbonate is preferably at least 17%, and more preferably at least 18%.
If the lithium quality of lithium carbonate is lower than a predetermined value, the lithium carbonate can be further purified to obtain lithium carbonate having higher quality. The purification can be carried out by a generally known technique.

### EXAMPLES

Next, the present invention was experimentally implemented, and its effects were confirmed as described below. However, the descriptions herein are only for the purpose of illustration, and are not intended to be limited.

### <Example 1: Sodium Removal Method>

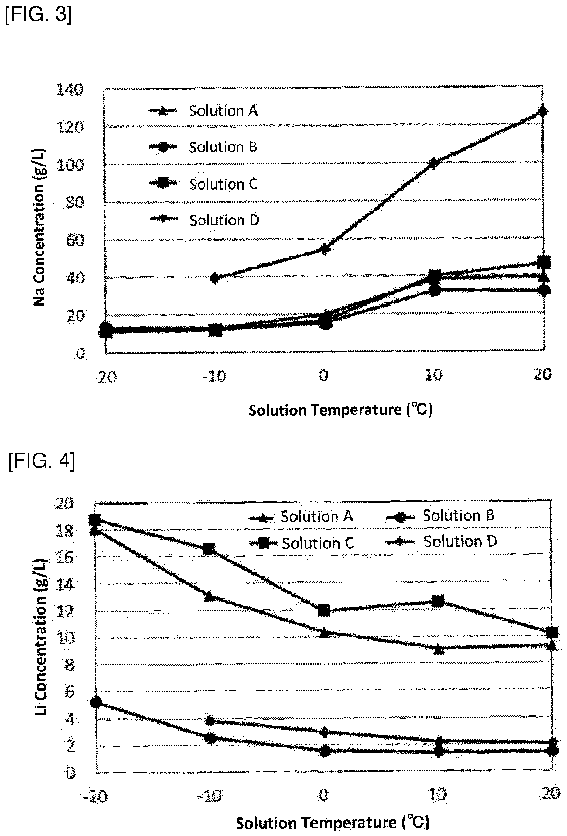

Four solutions A to D of sodium-containing solutions (sulfuric acid solutions) each having mainly different sodium concentrations were prepared. Each of the solutions A to D was gradually cooled to 20 °C, 10 °C, 0 °C, -10 °C, and -20 °C, and was maintained for one hour from the time when each target temperature was reached. During the maintaining, stirring was carried out. The sodium concentration was measured at each of the above temperatures during cooling. The results are shown by a graph in FIG. 3. After cooling and maintaining, solid-liquid separation was carried out to remove the precipitated sodium salt. In FIG. 3, the solution D is only showed for the sodium concentrations at the tempratures from 20 °C to -10 °C, because the solution solidified at a lower temperature and so any sample could not be obtained.

As shown in FIG. 3, the sodium concentration of each of the solutions A to D was gradually decreased with a decrease in the temperature, indicating that the sodium ion was effectively precipitated as a sodium salt. In particular, it was found that when the temperature was decreased between 0 °C to 10 °C, the sodium concentration became sufficiently low.

Therefore, according to the sodium removal method of the present invention, it was found that the sodium ion of the sodium-containing solution can be effectively remove to achieve a decrease in the sodium concentration in the sodium-containing solution by a relatively simple method.

### <Example 2: Metal Concentrating Method>

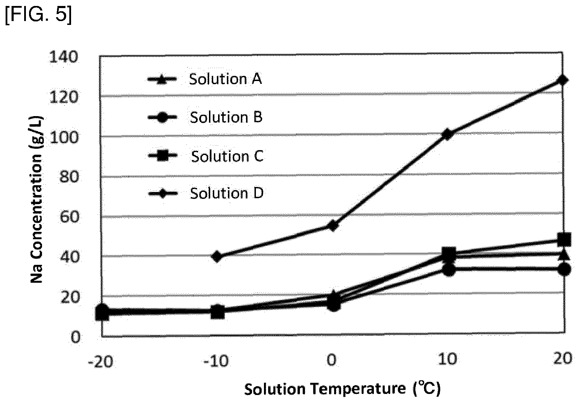

Four solutions A to D of the metal-containing solutions (sulfuric acid solutions) each containing a lithium ion and a sodium ion, which mainly had different metal ion concentrations, were prepared. Each of the solutions A to D was gradually cooled to 20 °C, 10 °C, 0 °C, -10 °C, and -20 °C, and was maintained for one hour from the time when each target temperature was reached. During the maintaining, stirring was carried out. The lithium concentration and sodium concentration were measured at each of the above temperatures during cooling. The results are shown by a graph in FIGS. 4 and 5, respectively. After cooling and maintaining, solid-liquid separation was carried out to remove the precipitated sodium salt. In FIGS. 4 and 5, the solution D is only shown for the concentrations at 20 °C to -10 °C, because the solution solidified at a lower temperature and so any sample could not be obtained.

As can be seen from FIGS. 4 and 5, as the solution temperature was lower, the lithium concentration was higher and the sodium concentration was lower. Further, the solution amount was also measured, confirming that lithium was not decreased from the weight calculated by multiplying the lithium concentration by the solution amount. On the other hand, an amount of sodium was decreased, indicating that the sodium ion was precipitated in the form of sodium sulfate, so that the sodium concentration was decreased.
In view of the foregoing, it was found that the metal concentrating method according to the present invention could effectively increase the concentration of metal ions to be concentrated.

## Claims

1. A method for removing sodium from a sodium-containing solution by precipitating a sodium ion in the sodium-containing solution as a sodium salt, the method comprising:
a sodium precipitating step of precipitating the sodium salt by decreasing a temperature of the sodium-containing solution so that a sodium concentration in the sodium-containing solution exceeds solubility of the sodium salt at said temperature; and a solid-liquid separation step of removing the precipitated sodium salt by solid-liquid separation.

2. The method according to claim 1, wherein the sodium-containing solution is a sulfuric acid acidic solution.

3. The method according to claim 1 or 2, wherein the method comprises adding sulfuric acid to the sodium-containing solution before the sodium precipitating step and/or during the sodium precipitating step.

4. The method according to any one of claims 1 to 3, wherein the sodium salt precipitated in the sodium precipitating step is sodium sulfate.

5. The method according to any one of claims 1 to 4, wherein the sodium-containing solution has a sodium concentration of 20.0 g/L or more.

6. The method according to any one of claims 1 to 5, wherein the temperature of the sodium-containing solution is decreased to 10 °C or less in the sodium precipitating step.

7. The method according to any one of claims 1 to 6, wherein the sodium-containing solution comprises a sodium-containing solution obtained by a wet treatment of lithium ion secondary battery scrap.

8. The method according to any one of claims 1 to 7, wherein the sodium-containing solution contains a lithium ion.

9. The method according to claim 8, wherein the sodium-containing solution has a lithium concentration of from 0.1 g/L to 40.0 g/L.

10. The method according to claim 8 or 9, wherein the sodium-containing solution has a molar ratio of the lithium concentration to the sodium concentration of larger than 0.08.

11. The method according to any one of claims 8 to 10, wherein a molar ratio of the lithium concentration to the sodium concentration in a separated solution obtained in the solid-liquid separation step is larger than a molar ratio of the lithium concentration to the sodium concentration in the sodium-containing solution before the sodium precipitating step.

12. A metal concentrating method for increasing a concentration of metal ions in a metal-containing solution containing a sodium ion and metal ions to be concentrated, the method comprising:
a sodium precipitating step of precipitating the sodium ion in the metal-containing solution as a sodium salt, wherein a temperature of the metal-containing solution is decreased so that a sodium concentration in the metal-containing solution exceeds solubility of the sodium salt at said temperature to precipitate a sodium salt having crystal water; and a solid-liquid separation step of removing the precipitated sodium salt by solid-liquid separation after the sodium precipitating step.

13. The metal concentrating method according to claim 12, wherein the metal-containing solution is a sulfuric acid acidic solution.

14. The metal concentrating method according to claim 12 or 13, wherein the metal concentrating method comprises adding sulfuric acid to the metal-containing solution before the sodium precipitating step and/or during the sodium precipitating step.

15. The metal concentrating method according to any one of claims 12 to 14, wherein the sodium salt having crystal water precipitated in the sodium precipitating step is a sodium sulfate hydrate.

16. The metal concentrating method according to any one of claims 12 to 15, wherein the metal-containing solution has a sodium concentration of 20.0 g/L or more.

17. The metal concentrating method according to any one of claims 12 to 16, wherein the temperature of the metal-containing solution is decreased to 10 °C or less in the sodium precipitating step.

18. The metal concentrating method according to any one of claims 12 to 17, wherein the metal-containing solution comprises a metal-containing solution obtained by a wet treatment of lithium ion secondary battery scrap.

19. The metal concentrating method according to any one of claims 12 to 18, wherein the metal ions to be concentrated comprise a lithium ion.

20. The metal concentrating method according to claim 19, wherein the metal-containing solution has a lithium concentration of from 0.1 g/L to 40.0 g/L.

21. The metal concentrating method according to claim 19 or 20, wherein the metal-containing solution has a molar ratio of the lithium concentration to the sodium concentration of larger than 0.08.

22. The metal concentrating method according to any one of claims 19 to 21, wherein a molar ratio of the lithium concentration to the sodium concentration in a separated solution obtained in the solid-liquid separation step is larger than a molar ratio of the lithium concentration to the sodium concentration in the metal-containing solution before the sodium precipitating step.

23. A metal recovery method, comprising recovering metals of metal ions to be concentrated, using the metal concentrating method according to any one of claims 12 to 22.
